# EUROPÄISCHE PATENTSCHRIFT

(11) **EP 2 316 676 B1**
(45) Veröffentlichungstag und Bekanntmachung des Hinweises auf die Patenterteilung: **25.01.2017**
(21) Anmeldenummer: 10188618.2
(22) Anmeldetag: 22.10.2010
(51) Int. Cl.: B60H 1/00

(54) **Luftführungsgehäuse**
Air distribution housing
Boîtier de distribution d'air

(30) Priorität: 29.10.2009 DE 102009051180
(43) Veröffentlichungstag der Anmeldung: 04.05.2011
(73) Patentinhaber: MAHLE Behr GmbH & Co. KG, 70469 Stuttgart (DE)
(72) Erfinder: Komowski, Michael, 71263, Weil der Stadt (DE)
(74) Vertreter: Grauel, Andreas

(56) Entgegenhaltungen:
- EP-A2- 1 930 193
- WO-A1-2008/051036
- DE-A1- 19 748 787
- DE-A1-102005 043 502
- JP-A- 58 206 411
- US-A1- 2007 218 824

## Beschreibung

Die Erfindung betrifft ein Luftführungsgehäuse gemäß dem Oberbegriff des Anspruchs 1 und eine Kraftfahrzeugklimaanlage gemäß dem Oberbegriff des Anspruchs 15.

Zum schnellen Abkühlen des Fahrzeuginnenraums sowie zur Verhinderung von unangenehmen Gerüchen sind heutige Kraftfahrzeugklimaanlagen für Personenkraftwagen mit einer Umschaltmöglichkeit von Umluft (U) auf Frischluft (F) mit gleichzeitiger Stauluftregelung ausgestattet.

Zur Regelung der jeweiligen Strömungsquerschnitte einer Umluftöffnung, durch welche Umluft in die Kraftfahrzeugklimaanlange eintritt, und einer Frischluftöffnung, durch welche Frischluft eintritt, werden im Stand der Technik beispielsweise zwei koaxial angeordnete Schaukelklappen eingesetzt. Eine andere bekannte Lösung verwendet zwei Schmetterlingsklappen. Bei den bekannten Klappenanordnungen ist jeweils eine der beiden Schaukelklappen bzw. eine der beiden Schmetterlingsklappen angeordnet, um die Umluftöffnung zu verschließen oder freizugeben, und die andere der beiden Schaukelklappen bzw. die andere der beiden Schmetterlingslclappen ist angeordnet, um die Frischluftöffnung zu verschließen oder freizugeben.

Nachteilig bei den aus dem Stand der Technik bekannten Konfigurationen ist jedoch, dass die Anordnung von beispielsweise zwei koaxialen Schaukelklappen einen großen Platzbedarf bezüglich der Höhe der Anordnung erfordert, die größer als der Radius einer Einlaufzarge ist, da ansonsten die Einlaufzarge nicht abgedeckt wird. Bei der Verwendung von zwei flachen Schmetterlingsklappen werden dagegen die Luftströmung und die Luftrichtung vor der Einlaufzarge beeinflusst. Auch dieser Typ von Klappen erfordert viel Platz für den Drehbereich. Nachteilig ist darüber hinaus, dass bei Verwendung von Schmetterlingsklappen diese immer in der Luftströmung angeordnet sind.

Um eine kompakte Bauweise zu erzielen, wird in DE 10 2005 043 502 A1 ein Ansaugmodul für eine Belüftungs-, Heizungs- oder Klimaanlage eines Kraftfahrzeugs vorgeschlagen, welches einen ersten Luftkanal und einen zweiten Luftkanal umfasst, zwischen denen eine Absperrvorrichtung zur Steuerung und/oder Regelung einer Luftzufuhr angeordnet ist. Der Umluftkanal und der Frischluftkanal sind in einem Gehäuse bezüglich einer einen Ausgangskanal mittig und senkrecht durchsetzenden Symmetrieebene annähernd spiegelsymmetrisch ausgebildet, wobei die Drehachse der Absperrvorrichtung in dieser Symmetrieebene liegt.

EP 1930193 offenbart ein Luftführungsgehäuse nach dem Oberbegriff des Anspruchs 1.

Die obigen Konfigurationen sind jedoch aufwändig und weisen die oben beschriebenen Nachteile auf.

Daher ist es die Aufgabe der vorliegenden Erfindung, ein Luftführungsgehäuse für Frischluft- und Umluftbetrieb mit Stauluftregelungsfunktion zu schaffen, mit welchem ein flacher Bauraum realisiert werden kann, wobei die Klappen zur Regelung der jeweiligen Strömungsquerschnitte für Frischluft- und Umluftbetrieb störungsfrei im Luftströmungskanal angeordnet sind.

Die Aufgabe der vorliegenden Erfindung wird durch ein Luftführungsgehäuse mit den Merkmalen gemäß Anspruch 1 und durch eine Kraftfahrzeugklimaanlage mit den Merkmalen gemäß Anspruch 11 gelöst. Vorteilhafte Weiterbildungen der vorliegenden Erfindung sind in den jeweiligen Unteransprüchen definiert.

Erfindungsgemäß wird ein Luftführungsgehäuse bereitgestellt, welches zumindest einen ersten Zulufteintritt, einen zweiten Zulufteintritt und einen Luftaustritt aufweist, wobei eine Klappenanordnung in dem Luftführungsgehäuse vorgesehen ist, mittels welcher eine Luftströmung durch den ersten Zulufteintritt und/oder den zweiten Zulufteintritt steuerbar ist, wobei die Klappenanordnung eine erste Klappe und eine zweite Klappe aufweist, wobei die erste Klappe angeordnet ist, um einen Strömungsquerschnitt des ersten Zulufteintritts zu regeln. Gemäß der Erfindung ist ein Strömungsquerschnitt des zweiten Zulufteintritts durch die erste Klappe und die zweite Klappe gemeinsam regelbar. Gemäß der erfindungsgemäßen Konfiguration, bei der zwei separate Klappen vorgesehen sind, ist eine der beiden Klappen, insbesondere die zweite Klappe ausschließlich zuständig für die Regelung des Strömungsquerschnitts des zweiten Zuluftkanals und die erste Klappe ist dabei zuständig für die Regelung des Strömungsquerschnitts sowohl des ersten Zuluftkanals als auch des zweiten Zuluftkanals. Die erste Klappe ist je nach Betriebsfall und Einstellung zur Reglung der jeweiligen Strömungsquerschnitte umschaltbar. Durch die Umschaltbarkeit der ersten Klappe, die in bekannten Konfigurationen lediglich einen Zulufteintritt öffnet oder verschließt, wird ermöglicht, dass diese in den Bereich der zweiten Klappe bewegt werden kann, um mit der zweiten Klappe gemeinsam den zweiten Zulufteintritt zu verschließen. Da die umschaltbare erste Klappe nicht über den ganzen Drehwinkel in der Einlaufzarge laufen muss, kann der Klappenradius völlig unabhängig vom Zargenradius der Einlaufzarge gestaltet werden, was eine geringe Höhe des Bauraums über der Einlaufzarge ermöglicht. Durch die erfindungsgemäße Konfiguration wird ein störungsfreier Sitz der ersten und zweiten Klappen in dem Luftführungsgehäuse realisiert, wobei eine optimale Gestaltung der Luftströmung sowohl im Frischluft-, im Stauluftregelungs- und im Umluft-Betriebsfall erreicht wird. Alle Betriebsfälle, einschließlich einer Zumischung, etc. sind mit der erfindungsgemäßen Konfiguration einfach einstellbar. Darüber hinaus kann die Höhe des Ansaugkanals gering gehalten werden und stellt keine geometrische Einschränkung für die beiden Klappen dar.

Gemäß einer bevorzugten Ausführungsform ist der erste Zulufteintritt ein Umfufteintritt.

Gemäß einer weiteren bevorzugten Ausführungsform ist der zweite Lufteintritt ein Frischlufteintritt.

Vorzugsweise ist der erste Zulufteintritt durch die erste Klappe vollständig verschließbar.

Gemäß noch einer weiteren bevorzugten Ausführungsform ist der zweite Zulufteintritt durch die erste Klappe und die zweite Klappe gemeinsam vollständig verschließbar. Die erste Klappe ist somit nicht nur zur Regelung des Strömungsquerschnitts in dem ersten Zulufteintritt zuständig, sondern kann je nach Betriebsfall und Einstellung der Kraftfahrzeugklimaanlage umgeschaltet werden, um in den Bereich des zweiten Zulufteintritts geschwenkt zu werden, und dort ebenfalls zur Regelung des Strömungsquerschnitts zu dienen.

Darüber hinaus können gemäß noch einer weiteren bevorzugten Ausführungsform die erste Klappe und die zweite Klappe beim Verschließen des zweiten Zulufteintritts in direktem Kontakt stehen.

Gemäß der Erfindung ist in dem Luftführungsgehäuse ein als Anschlag für die erste Klappe und die zweite Klappe wirkender Zwischensteg angeordnet.

Vorzugsweise kontaktieren die erste Klappe und die zweite Klappe in einer Stellung, in welcher sie gemeinsam den zweiten Zulufteintritt vollständig verschließen, jeweilig den Zwischensteg.

Gemäß einer weiteren bevorzugten Ausführungsform ist die erste Klappe als Schaukelklappe ausgebildet.

Vorzugsweise ist die zweite Klappe als Schaukelklappe ausgebildet. Wenn gemäß einer bevorzugten Ausführungsform sowohl die erste Klappe als auch die zweite Klappe als Schaukelklappen konzipiert sind, ist es darüber hinaus bevorzugt, wenn die erste Klappe in Bezug auf die zweite Klappe umgedreht angeordnet ist.

Alternativ kann die zweite Klappe als Schmetterlingsklappe ausgebildet sein.

Die erste Klappe weist eine Drehachse auf, um welche die erste Klappe zum Freigeben und Verschließen des Strömungsquerschnitts des ersten Zulufteintritts drehbar ist.

Die zweite Klappe weist eine Drehachse auf, um welche die zweite Klappe zum Freigeben und zumindest teilweisen Verschließen des Strömungsquerschnitts des zweiten Zulufteintritts drehbar ist.

Gemäß der Erfindung sind die Drehachse der ersten Klappe und die Drehachse der zweiten Klappe in der Höhe versetzt zueinander angeordnet. Hierdurch wird strömungstechnisch ein Optimum für alle Bereiche der Stauluftregelung (inklusive 100 % Frischluft) erzielt.

Erfindungsgemäß wird darüber hinaus eine Kraftfahrzeugklimaanlage bereitgestellt, welche ein Luftführungsgehäuse mit den obigen Merkmalen aufweist.

Im Folgenden wird die Erfindung anhand eines Ausführungsbeispiels unter Bezugnahme auf die Zeichnung detailliert erläutert. In der Zeichnung zeigen:
- Fig.1: eine Schnittansicht eines Luftführungsgehäuses gemäß einer Ausführungsform, wobei die Klappenanordnung auf 100 % Frischluftbetrieb eingestellt ist;
- Fig. 2: eine Schnittansicht des Luftführungsgehäuses von Fig. 1, wobei die Klappenanordnung auf 100 % Frischluftbetrieb mit einem variablen Umluftanteil eingestellt ist;
- Fig. 3a, 3b: jeweilige Schnittansichten des Luftführungsgehäuses von Fig. 1 mit Stauluftregelung;
- Fig. 4: eine Schnittansicht des Luftführungsgehäuses von Fig. 1, wobei die Klappenanordnung auf 100 % Umluftbetrieb mit variablem Frischluftanteil eingestellt ist;
- Fig. 5: eine Schnittansicht des Luftführungsgehäuses von Fig. 1, wobei die Klappenanordnung auf 100 % Umluftbetrieb eingestellt ist;
- Fig. 6: eine Schnittansicht eines Luftführungsgehäuses gemäß einer weiteren Ausführungsform, wobei die Klappenanordnung auf 100 % Frischluftbetrieb eingestellt ist;
- Fig. 7: eine Schnittansicht eines Luftführungsgehäuses, wobei die Klappenanordnung auf 100 % Umluftbetrieb eingestellt ist.

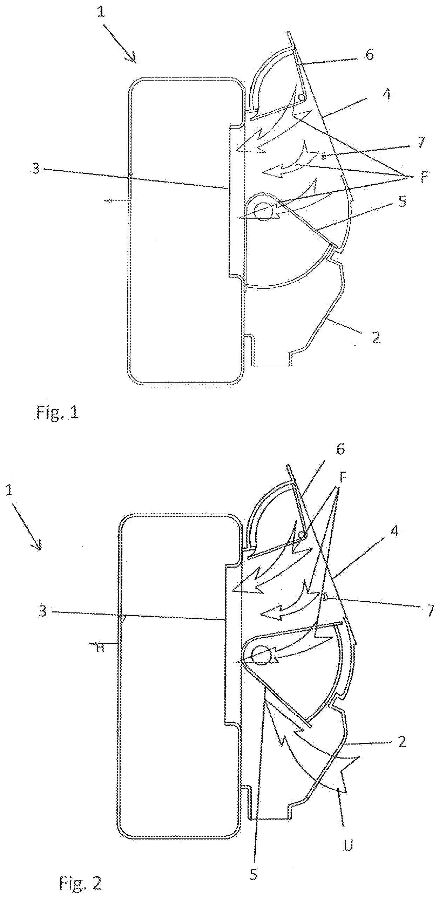

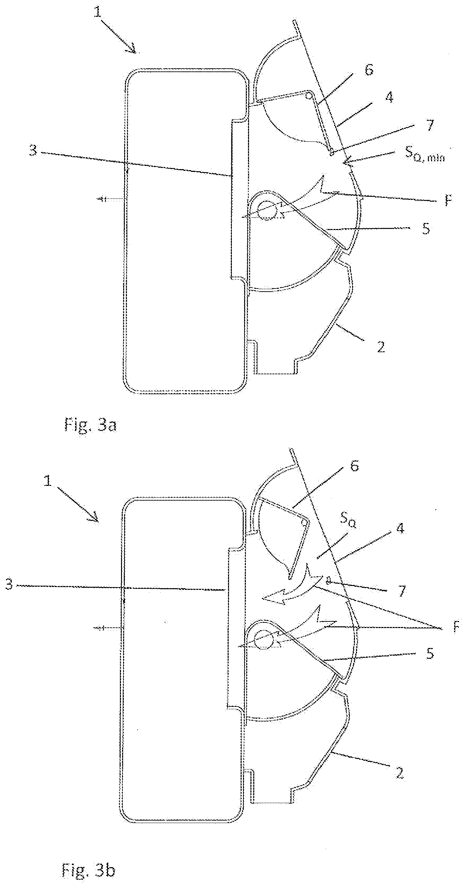

Fig. 1 zeigt eine Schnittansicht eines Luftführungsgehäuses 1 gemäß einer Ausführungsform, welches ein Bestandteil einer Kraftfahrzeugklimaanlage ist. Das Luftführungsgehäuse 1 weist einen ersten Zulufteintritt 2 auf, welcher als Umlufteintritt wirkt, um eine Umluftströmung zu einem Luftaustritt 3 des Luftführungsgehäuses 1 zu leiten. Weiterhin weist das Luftführungsgehäuse 1 einen zweiten Zulufteintritt 4 auf, welcher als Frischlufteintritt wirkt, um eine Frischluftströmung F zu dem Luftaustritt 3 zu leiten. In dem Luftführungsgehäuse 1 ist eine Klappenanordnung vorgesehen, welche eine erste Klappe 5 und eine zweite Klappe 6 aufweist. Darüber hinaus ist in dem Luftführungsgehäuse 1 ein Zwischensteg 7 angeordnet, welcher weiter unten in Zusammenhang mit Fig. 3a noch weiter beschrieben wird. Die erste Klappe 5 ist als Schaukelklappe ausgebildet und weist eine Drehachse D₁ auf, um welche die erste Klappe 5 von einer ersten Position, in welcher die erste Klappe 5 den ersten Zulufteintritt 2 vollständig verschließt, zu einer zweiten Position, in welcher die erste Klappe 5 den ersten Zulufteintritt 2 vollständig freigibt, verschwenkbar ist. In der Figur ist die erste Position dargestellt, in welcher der erste Zulufteintritt 2 vollständig verschlossen bzw. abgesperrt ist. Die zweite Klappe 6 ist ebenfalls als Schaukelklappe ausgebildet und ist in Bezug auf die erste Klappe 5 umgedreht angeordnet. Die zweite Klappe 6 weist ebenfalls eine Drehachse D₂ auf, welche bezüglich der Höhe zu der Drehachse D₁ der ersten Klappe 5 versetzt ist. Die zweite Klappe 6 ist um ihre Drehachse D₂ herum auch von einer ersten Position in eine zweite Position verschwenkbar. Jedoch verschließt die zweite Klappe 6 in der ersten Position den zweiten Zulufteintritt 4 nur teilweise. In der zweiten Position gibt die zweite Klappe 6 den zweiten Zulufteintritt 4 vollständig frei. In der Figur ist die zweite Klappe 6 in der zweiten Position dargestellt, in welcher sie den zweiten Zulufteintritt 4 vollständig freigibt, was hier bei gleichzeitig vollständig geschlossenem ersten Zulufteintritt 2 einer Einstellung auf 100 % Frischluft entspricht.

Fig. 2 zeigt eine Schnittansicht des Luftführungsgehäuses 1 von Fig. 1, wobei die Klappenanordnung im Gegensatz zu Fig. 1 auf 100 % Frischluftbetrieb mit einem variablen Umluftanteil eingestellt ist. Wie in der Figur erkannt werden kann, ist die erste Klappe 5 um ihre Drehachse D₁ herum aus der ersten Position heraus geschwenkt und gibt dadurch einen Teil des ersten Zulufteintritts 2 frei, um es einer Umluftströmung U zu erlauben, in das Luftführungsgehäuse 1 einzutreten und zu dem Luftaustritt 3 weitergeleitet zu werden.

Fig. 3a und 3b zeigen jeweilige Schnittansichten des Luftführungsgehäuses 1 von Fig. 1 mit Stauluftregelung. In Fig. 3a ist eine Situation dargestellt, in welcher ein minimaler Stauluftquerschnitt S_{Q, min} freigegeben ist. Dabei befindet sich die erste Klappe 5 in der ersten Position, in welcher der erste Zulufteintritt 2 vollständig verschlossen ist. Die zweite Klappe 6, befindet sich ebenfalls in der ersten Position, in welcher sie den zweiten Zulufteintritt 6 zumindest teilweise verschließt. In der ersten Position der zweiten Klappe 6 liegt diese an dem Zwischensteg 7 an. Die in Fig. 3b dargestellte Situation weicht von der in Fig. 3a dargestellten Situation dadurch ab, dass die zweite Klappe 6 um ihre Drehachse D₂ in Richtung zu ihrer zweiten Position verschwenkt worden ist, wobei der Stauluftquerschnitt S_{Q} vergrößert wird, durch welchen die Frischluftströmung F in das Luftführungsgehäuse 1 eintritt.

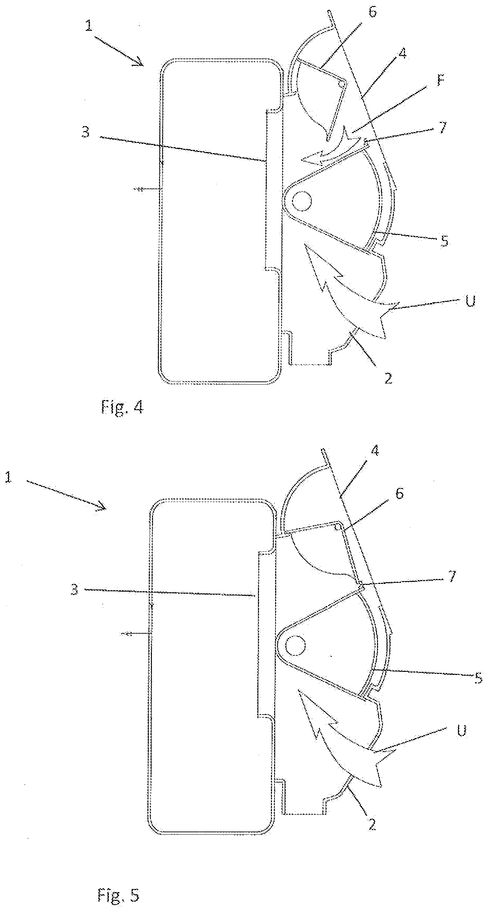

Fig. 4 zeigt eine Schnittansicht des Luftführungsgehäuses 1 von Fig. 1, wobei die Klappenanordnung auf 100 % Umluftbetrieb mit variablem Frischluftanteil eingestellt ist. Wie erkennbar ist, befindet sich hierbei die erste Klappe 5 in der zweiten Position, in welcher sie den ersten Zulufteintritt 2 vollständig bzw. mit einem maximalen Strömungsquerschnitt für eine Umluftströmung U freigibt. In der zweiten Position liegt die erste Klappe 5 an dem Zwischensteg 7 an. Die zweite Klappe 6 befindet sich dagegen in einer intermediären Position zwischen ihrer ersten und zweiten Position, so dass ein gewisser Anteil von Frischluftströmung F durch den zweiten Zulufteintritt 4 in das Luftführungsgehäuse 1 eintreten kann.

Fig. 5 zeigt eine Schnittansicht des Luftführungsgehäuses 1 von Fig. 1, wobei die Klappenanordnung auf 100 % Umluftbetrieb eingestellt ist. Hierbei befindet sich die erste Klappe 5 in der zweiten Position, in welcher der erste Zulufteintritt 2 vollständig bzw. mit einem maximalen Strömungsquerschnitt für die Umluftströmung U freigegeben ist. Die zweite Klappe 6 befindet sich in ihrer ersten Position, in welcher sie gegen den Zwischensteg 7 anschlägt und den zweiten Zulufteintritt 4 zumindest teilweise verschließt. In der in Figur 5 dargestellten Situation, in welcher sich die Einstellung der Klappenanordnung auf 100 % Umluft befindet, wird der zweite Zulufteintritt 4 jedoch dadurch, dass sich die erste Klappe 5 in der zweiten Position befindet, in welcher sie ebenfalls an dem Zwischensteg 7 anliegt, vollständig durch das Zusammenwirken der ersten Klappe 5 und der zweiten Klappe 6 abgeschlossen, so dass keine Frischluftströmung in das Luftführungsgehäuse 1 eintreten kann.

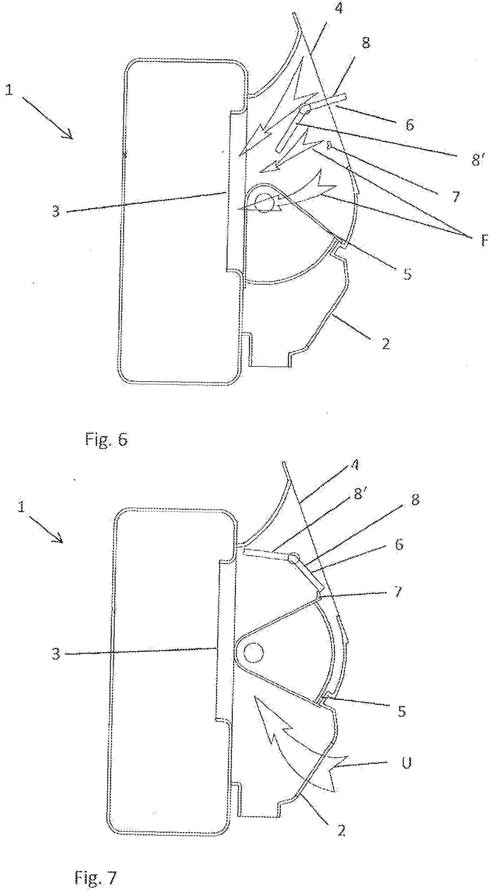

Fig. 6 zeigt eine Schnittansicht eines Luftführungsgehäuses 1 gemäß einer weiteren Ausführungsform, wobei die Klappenanordnung auf 100 % Frischluftbetrieb eingestellt ist. Die hier dargestellte Ausführungsform unterscheidet sich von der in Figuren 1 bis 5 gezeigten Ausführungsform dadurch, dass die zweite Klappe 6 nicht als Schaukelklappe sondern als flache und abgewinkelte Flügelklappe ausgebildet ist, welche ebenfalls um eine Drehachse D₂ verschwenkbar ist. Im Gegensatz zu der in Figuren 1 bis 5 dargestellten Ausführungsform ist die zweite Klappe 6 jedoch in ihrer zweiten Position, in welcher sie in dem zweiten Zulufteintritt 6 einen maximalen Strömungsquerschnitt freigibt, derartig angeordnet, dass ihre jeweiligen Flügel 8, 8' im Wesentlichen parallel zu der in den zweiten Zulufteintritt 4 eintretenden Frischluftströmung F ausgerichtet sind.

Schließlich zeigt Fig. 7 eine Schnittansicht eines Luftführungsgehäuses 1, wobei die Klappenanordnung auf 100 % Umluftbetrieb eingestellt ist. Der zweite Zulufteintritt 4 wird auch hier gemeinsam durch die erste Klappe 5 und die zweite Klappe 6 vollständig verschlossen. Die erste Klappe 5 befindet sich in ihrer zweiten Position, in welcher ein maximaler Strömungsquerschnitt für die Umluftströmung U an dem ersten Zulufteintritt 2 freigegeben ist. Die zweite Klappe 6 befindet sich in ihrer ersten Position, in welcher sie an dem Zwischensteg 7 anliegt und den zweiten Zulufteintritt 4 zumindest teilweise verschließt. Da die erste Klappe 5 und die zweite Klappe 6 beide an dem Zwischensteg 7 anliegen, verschließen sie gemeinsam den zweiten Zulufteintritt 4. Alternativ, wenn kein Zwischensteg 7 vorgesehen ist, liegen bei einer Einstellung 100 % Umluft die erste Klappe 5 und die zweite Klappe 6 direkt aneinander an bzw. stehen miteinander in Kontakt.

Insgesamt betrachtet können mit einem derartigen Luftführungsgehäuse 1 in einer Kraftfahrzeugklimaanlage ein Frischluft- und/oder Umluftbetrieb mit Stauluftregelungsfunktion in einer flachen und platzsparenden Bauweise realisiert werden.

### Bezugszeichenliste

- 1: Luftführungsgehäuse
- 2: erster Zulufteintritt
- 3: Luftaustritt
- 4: zweiter Zulufteintritt
- 5: erste Klappe
- 6: zweite Klappe
- 7: Zwischensteg
- 8, 8': Flügel
- F: Frischluftströmung
- U: Umluftströmung
- D₁: Drehachse der ersten Klappe
- D₂: Drehachse der zweiten Klappe
- S_{Q}: Stauluftquerschnitt
- S_{Q, min}: minimaler Stauluftquerschnitt

## Patentansprüche

1. Luftführungsgehäuse (1), welches zumindest einen ersten Zulufteintritt (2), einen zweiten Zulufteintritt (4) und einen Luftaustritt (3) aufweist, wobei eine Klappenanordnung in dem Luftführungsgehäuse (1) vorgesehen ist, mittels welcher eine Luftströmung durch den ersten Zulufteintritt (2) und/oder den zweiten Zulufteintritt (4) steuerbar ist, wobei die Klappenanordnung eine erste Klappe (5) und eine zweite Klappe (6) aufweist, wobei die erste Klappe (5) angeordnet ist, um einen Strömungsquerschnitt des ersten Zulufteintritts (2) zu regeln, wobei ein Strömungsquerschnitt des zweiten Zulufteintritts (4) durch die erste Klappe (5) und die zweite Klappe (6) gemeinsam regelbar ist, wobei die erste Klappe (5) eine Drehachse (D₁) aufweist, um welche die erste Klappe (5) zum Freigeben und Verschließen des Strömungsquerschnitts des ersten Zulufteintritts (2) drehbar ist, wobei die zweite Klappe (6) eine Drehachse (D₂) aufweist, um welche die zweite Klappe (6) zum Freigeben und zumindest teilweisen Verschließen des Strömungsquerschnitts des zweiten Zulufteintritts (4) drehbar ist und die Drehachse (D₁) der ersten Klappe (5) und die Drehachse (D₂) der zweiten Klappe (6) in der Höhe versetzt zueinander angeordnet sind.
**dadurch gekennzeichnet, dass** in dem Luftführungsgehäuse (1) ein als Anschlag für die erste Klappe (5) und die zweite Klappe (6) wirkender Zwischensteg (7) angeordnet ist

2. Luftführungsgehäuse (1) nach Anspruch 1, **dadurch gekennzeichnet, dass** der erste Zulufteintritt (2) ein Umlufteintritt ist.

3. Luftführungsgehäuse (1) nach Anspruch 1 oder 2, **dadurch gekennzeichnet, dass** der zweite Zulufteintritt (4) ein Frischlufteintritt ist.

4. Luftführungsgehäuse (1) nach einem oder mehreren der Ansprüche 1 bis 3, **dadurch gekennzeichnet, dass** der erste Zulufteintritt (2) durch die erste Klappe (5) vollständig verschließbar ist.

5. Luftführungsgehäuse (1) nach einem oder mehreren der Ansprüche 1 bis 4, **dadurch gekennzeichnet, dass** der zweite Zulufteintritt (4) durch die erste Klappe (5) und die zweite Klappe (6) gemeinsam vollständig verschließbar ist.

6. Luftführungsgehäuse (1) nach einem oder mehreren der Ansprüche 1 bis 5, **dadurch gekennzeichnet, dass** die erste Klappe (5) und die zweite Klappe (6) beim Verschließen des zweiten Zulufteintritts (4) in direktem Kontakt stehen.

7. Luftführungsgehäuse (1) nach einem der Ansprüche 1 bis 6, **dadurch gekennzeichnet, dass** die erste Klappe (5) und die zweite Klappe (6) in einer Stellung, in welcher sie gemeinsam den zweiten Zulufteintritt (4) vollständig verschließen, jeweilig den Zwischensteg (7) kontaktieren

8. Luftführungsgehäuse (1) nach einem oder mehreren der Ansprüche 1 bis 7, **dadurch gekennzeichnet, dass** die erste Klappe (5) als Schaukelklappe ausgebildet ist.

9. Luftführungsgehäuse (1) nach einem oder mehreren der Ansprüche 1 bis 8, **dadurch gekennzeichnet, dass** die zweite Klappe (6) als Schaukelklappe ausgebildet ist.

10. Luftführungsgehäuse (1) nach einem oder mehreren der Ansprüche 1 bis 8, **dadurch gekennzeichnet, dass** die zweite Klappe (6) als Schmetterlingsklappe ausgebildet ist.

11. Kraftfahrzeugklimaanlage, **dadurch gekennzeichnet, dass** die Kraftfahrzeugklimaanlage ein Luftführungsgehäuse (1) nach einem oder mehreren der Ansprüche 1 bis 10 aufweist.

## Claims

1. An air guide housing (1) having at least a first incoming air inlet (2), a second incoming air inlet (4) and an air outlet (3), wherein a flap arrangement in the air guide housing (1) is provided, by means of which an air flow through the first incoming air inlet (2) and/or the second incoming air inlet (4) is controllable, wherein the flap arrangement has a first flap (5) and a second flap (6), wherein the first flap (5) is arranged to regulate a flow cross-section of the first incoming air inlet (2), **characterised in that** a bridge (7) acting as a stop for the first flap (5) and the second flap (6) is arranged in the air guide housing (1), wherein a flow cross-section of the second incoming air inlet (4)can be jointly regulated by the first flap (5) and the second flap (6), wherein the first flap (5) has an axis of rotation (D₁) around which the first flap (5) can be rotated in order to release and close the flow cross-section of the first incoming air inlet (2), wherein the second flap (6) has an axis of rotation (D₂) around which the second flap (6) can be rotated in order to release and at least partially close the flow cross-section of the second incoming air inlet (4) and the axis of rotation (D₁) of the first flap (5) and the axis of rotation (D₂) of the second flap (6) are arranged such that they are offset in height from each other.

2. The air guide housing (1) according to claim 1, **characterised in that** the first incoming air inlet (2) is a recirculating air inlet.

3. The air guide housing (1) according to claim 1 or 2, **characterised in that** the second incoming air inlet (4) is a fresh air inlet.

4. The air guide housing (1) according to one or more of claims 1 to 3, **characterised in that** the first incoming air inlet (2) can be fully closed by the first flap (5).

5. The air guide housing (1) according to one or more of claims 1 to 4, **characterised in that** the second incoming air inlet (4) can be fully closed by the first flap (5) and the second flap (6) together.

6. The air guide housing (1) according to one or more of claims 1 to 5, **characterised in that** the first flap (5) and the second flap (6) are in direct contact when closing the second incoming air inlet (4).

7. The air guide housing (1) according to one of claims 1 to 6, **characterised in that** in a position in which the first flap (5) and the second flap (6) together close the second incoming air inlet (4) completely, they each contact the bridge (7).

8. The air guide housing (1) according to one or more of claims 1 to 7, **characterised in that** the first flap (5) is designed as a swing flap.

9. The air guide housing (1) according to one or more of claims 1 to 8, **characterised in that** the second flap (6) is designed as a swing flap.

10. The air guide housing (1) according to one or more of claims 1 to 8, **characterised in that** the second flap (6) is designed as a butterfly flap.

11. A vehicle air-conditioning system, **characterised in that** the vehicle air-conditioning system has an air guide housing (1) according to one or more of claims 1 to 10.

## Revendications

1. Carter de guidage d'air (1) qui présente au moins une première entrée d'air pulsé (2), une deuxième entrée d'air pulsé (4) et une sortie d'air (3), où il est prévu, dans le carter de guidage d'air (1), un agencement de volets au moyen duquel peut être régulé un écoulement d'air traversant la première entrée d'air pulsé (2) et / ou la deuxième entrée d'air pulsé (4), où l'agencement de volets présente un premier volet (5) et un deuxième volet (6), où le premier volet (5) est disposé pour réguler une section d'écoulement de la première entrée d'air pulsé (2), **caractérisé en ce qu'**une barrette intermédiaire (7) agissant comme une butée pour le premier volet (5) et le deuxième volet (6) est disposée dans le carter de guidage d'air (1), où une section d'écoulement de la deuxième entrée d'air pulsé (4) peut être régulée de façon conjointe par le premier volet (5) et par le deuxième volet (6), où le premier volet (5) présente un axe de rotation (D₁) autour duquel peut tourner le premier volet (5) pour libérer et fermer la section d'écoulement de la première entrée d'air pulsé (2), où le deuxième volet (6) présente un axe de rotation (D₂) autour duquel peut tourner le deuxième volet (6) pour libérer et fermer au moins partiellement la section d'écoulement de la deuxième entrée d'air pulsé (4), et l'axe de rotation (D₁) du premier volet (5) et l'axe de rotation (D₂) du deuxième volet (6) sont disposés en étant décalés en hauteur l'un par rapport à l'autre.

2. Carter de guidage d'air (1) selon la revendication 1, **caractérisé en ce que** la première entrée d'air pulsé (2) est une entrée d'air recyclé.

3. Carter de guidage d'air (1) selon la revendication 1 ou 2, **caractérisé en ce que** la deuxième entrée d'air pulsé (4) est une entrée d'air frais.

4. Carter de guidage d'air (1) selon l'une quelconque ou plusieurs des revendications 1 à 3, **caractérisé en ce que** la première entrée d'air pulsé (2) peut être fermée complètement par le premier volet (5).

5. Carter de guidage d'air (1) selon l'une quelconque ou plusieurs des revendications 1 à 4, **caractérisé en ce que** la deuxième entrée d'air pulsé (4) peut être fermée complètement, de façon conjointe, par le premier volet (5) et par le deuxième volet (6).

6. Carter de guidage d'air (1) selon l'une quelconque ou plusieurs des revendications 1 à 5, **caractérisé en ce que** le premier volet (5) et le deuxième volet (6) sont en contact direct lors de la fermeture de la deuxième entrée d'air pulsé (4).

7. Carter de guidage d'air (1) selon l'une quelconque des revendications 1 à 6, **caractérisé en ce que** le premier volet (5) et le deuxième volet (6) sont respectivement au contact de la barrette intermédiaire (7) quand ils sont dans une position dans laquelle ils ferment complètement, de façon conjointe, la deuxième entrée d'air pulsé (4).

8. Carter de guidage d'air (1) selon l'une quelconque ou plusieurs des revendications 1 à 7, **caractérisé en ce que** le premier volet (5) est conçu comme un volet basculant.

9. Carter de guidage d'air (1) selon l'une quelconque ou plusieurs des revendications 1 à 8, **caractérisé en ce que** le deuxième volet (6) est conçu comme un volet basculant.

10. Carter de guidage d'air (1) selon l'une quelconque ou plusieurs des revendications 1 à 8, **caractérisé en ce que** le deuxième volet (6) est conçu comme un volet papillon.

11. Système de climatisation d'un véhicule automobile, **caractérisé en ce que** le système de climatisation du véhicule automobile présente un carter de guidage d'air (1) selon l'une quelconque ou plusieurs des revendications 1 à 10.
